# EUROPEAN PATENT APPLICATION

(11) **EP 4 838 816 A1**
(43) Date of publication of application: **11.11.2026**
(21) Application number: 24914773.7
(22) Date of filing: 16.07.2024
(51) Int. Cl.: H04L 5/00, H04W 72/04

(54) **INFORMATION TRANSMISSION METHOD, APPARATUS, AND STORAGE MEDIUM**

(30) Priority: 03.01.2024 CN 202410027333
(71) Applicant: ZTE CORPORATION, Shenzhen, Guangdong 518057 (CN)
(72) Inventor: XUE, Yan, Shenzhen, Guangdong 518057 (CN); XIE, Feng, Shenzhen, Guangdong 518057 (CN)
(74) Representative: Ziebig Hengelhaupt Intellectual Property Attorneys Patentanwaltskanzlei PartGmbB
(86) International application number: PCT/CN2024/105673
(87) International publication number: WO 2025/145551

(57) **Abstract**

Embodiments of the present disclosure relate to the technical field of communications, and provide an information transmission method, an apparatus, and a storage medium. The method is applied to a first node. The method comprises: receiving first control information, wherein the first control information is used for indicating an association relationship between a hybrid automatic repeat request (HARQ) entity and a physical shared channel set; and associating the HARQ entity with the physical shared channel set on the basis of the first control information.

## Description

### CROSS-REFERENCE TO RELATED APPLICATIONS

The present application claims the priority to the Chinese patent application No. 202410027333.7 filed with the CNIPA on January 3, 2024, and entitled "INFORMATION TRANSMISSION METHOD, APPARATUS, AND STORAGE MEDIUM", of which the entire contents are incorporated herein by reference.

### TECHNICAL FIELD

The present disclosure relates to the technical field of communications, in particular to an information transmission method, an apparatus, and a storage medium.

### BACKGROUND

In a communication system, different carriers are located on different hybrid automatic repeat request (HARQ) entities. However, different HARQ entities cannot share data memory or perform cross-carrier data transmission, which prevents the communication system from fully utilizing carrier resources for data transmission, leading to a problem of poor data transmission performance.

### SUMMARY

Embodiments of the present disclosure provide an information transmission method, an apparatus, and a storage medium, for improving resource utilization of carrier resources in a data transmission process.

In a first aspect, an information transmission method is provided. The information transmission method is applied to a first node, and includes: receiving first control information, wherein the first control information is used for indicating an association relationship between a hybrid automatic repeat request (HARQ) entity and a physical shared channel set; and associating the HARQ entity with the physical shared channel set based on the first control information.

In a second aspect, an information transmission method is provided. The information transmission method is applied to a second node, and includes: associating an HARQ entity with a physical shared channel set; and sending first control information, wherein the first control information is used for indicating an association relationship between the HARQ entity and the physical shared channel set.

In a third aspect, a communication apparatus is provided. The communication apparatus is applied to a first node, and includes: a receiving unit, configured to receive first control information, wherein the first control information is used for indicating an association relationship between a hybrid automatic repeat request (HARQ) entity and a physical shared channel set; and a processing unit, configured to associate the HARQ entity with the physical shared channel set based on the first control information.

In a fourth aspect, a communication apparatus is provided. The communication apparatus is applied to a second node, and includes: a processing unit, configured to associate an HARQ entity with a physical shared channel set; and a sending unit, configured to send first control information, wherein the first control information is used for indicating an association relationship between the HARQ entity and the physical shared channel set.

In a fifth aspect, a communication apparatus is provided, including: a processor and a memory; wherein the memory and the processor are coupled; the memory is configured to store processor-executable instructions, and the memory stores the processor-executable instructions; and the processor, when configured to execute the instructions, causes the communication apparatus to implement the method as provided in any one of the first aspect or the second aspect mentioned above.

In a sixth aspect, a computer-readable storage medium is provided. The computer-readable storage medium stores computer instructions, and the computer instructions, when running on a computer, cause the computer to perform the method provided by any one of the first aspect or the second aspect.

In a seventh aspect, a computer program product including computer instructions is provided, and the computer instructions, when running on a computer, cause the computer to perform the method provided by any one of the first aspect or the second aspect.

### BRIEF DESCRIPTION OF DRAWING(S)

The accompanying drawings are intended to provide further understanding of the technical solutions of the present disclosure, constitute a part of the specification, and are used to explain the technical solutions of the present disclosure together with embodiments of the present disclosure, but do not constitute a limitation to the technical solutions of the present disclosure.
FIG. 1 is a schematic diagram of data mapping in a 5G system provided in the related art.
FIG. 2 is a schematic diagram of another data mapping in a 5G system provided in the related art.
FIG. 3 is a schematic diagram of another data mapping in a 5G system provided in the related art.
FIG. 4 is a schematic structural diagram of a communication system provided by an embodiment of the present disclosure.
FIG. 5 is a schematic flowchart of an information transmission method provided by an embodiment of the present disclosure.
FIG. 6 is a schematic flowchart of another information transmission method provided by an embodiment of the present disclosure.
FIG. 7 is a schematic diagram of an association relationship among an HARQ entity, a physical shared channel set, and a transmission resource set provided by an embodiment of the present disclosure.
FIG. 8 is a schematic diagram of another association relationship among an HARQ entity, a physical shared channel set, and a transmission resource set provided by an embodiment of the present disclosure.
FIG. 9 is a schematic diagram of another association relationship among an HARQ entity, a physical shared channel set, and a transmission resource set provided by an embodiment of the present disclosure.
FIG. 10 is a schematic diagram of another association relationship among an HARQ entity, a physical shared channel set, and a transmission resource set provided by an embodiment of the present disclosure.
FIG. 11 is a schematic diagram of another association relationship among an HARQ entity, a physical shared channel set, and a transmission resource set provided by an embodiment of the present disclosure.
FIG. 12 is a schematic diagram of cross-carrier retransmission provided by an embodiment of the present disclosure.
FIG. 13 is a schematic diagram of another cross-carrier retransmission provided by an embodiment of the present disclosure.
FIG. 14 is a schematic diagram of another cross-carrier retransmission provided by an embodiment of the present disclosure.
FIG. 15 is a schematic diagram of an association between a carrier and a physical shared channel provided by an embodiment of the present disclosure.
FIG. 16 is a schematic diagram of a transmission resource association under one HARQ entity multiplexed by a plurality of DRBs provided by an embodiment of the present disclosure.
FIG. 17 is a schematic diagram of a transmission resource association under one HARQ entity corresponding to a plurality of DRBs provided by an embodiment of the present disclosure.
FIG. 18 is a schematic diagram of a transmission resource association under one HARQ entity corresponding to one DRB provided by an embodiment of the present disclosure.
FIG. 19 is a schematic flowchart of another information transmission method provided by an embodiment of the present disclosure.
FIG. 20 is a schematic flowchart of another information transmission method provided by an embodiment of the present disclosure.
FIG. 21 is a schematic composition diagram of a communication apparatus provided by an embodiment of the present disclosure.
FIG. 22 is a schematic composition diagram of another communication apparatus provided by an embodiment of the present disclosure.
FIG. 23 is a schematic structural diagram of a communication apparatus provided by an embodiment of the present disclosure.

### DETAILED DESCRIPTION

The technical solutions in the embodiments of the present disclosure will be described below clearly and completely with reference to the accompanying drawings in the embodiments of the present disclosure. Apparently, the described embodiments are merely some rather than all of the embodiments of the present disclosure. On the basis of the embodiments in the present disclosure, all other embodiments obtained by those ordinarily skilled in the art without inventive efforts fall within the scope of protection of the present disclosure.

Unless otherwise specified in the context, throughout the specification and claims, the term "comprise" and its other forms, such as the third-person singular form "comprises" and the present participle form "comprising," are to be construed as open and inclusive, i.e., "including, but not limited to." In the description of the specification, the terms "one embodiment," "some embodiments," "exemplary embodiments," "example," "specific example," or "some examples" are intended to indicate that a particular feature, structure, material, or characteristic related to that embodiment or example is included in at least one embodiment or example of the present disclosure. The schematic representations of the above terms do not necessarily refer to the same embodiment or example. Furthermore, the particular features, structures, materials, or characteristics may be included in any one or more embodiments or examples in any suitable manner.

The terms "first" and "second" are only configured to describe the purpose, and cannot be understood as indicating or implying relative importance or implicitly indicating the quantity of the indicated technical features. Therefore, the features defined as "first" and "second" may explicitly or implicitly include one or more of such features. In the description of the present disclosure, unless otherwise specified, the meaning of "a plurality of" is two or more.

In the embodiment of the present disclosure, a word "exemplary" or "for example" is used to represent being an example, example illustration or description. Any embodiment or design solution described as "exemplary" or "for example" in the embodiment of the present disclosure should not be explained being more preferred or having more advantages than other embodiments or design solutions. Exactly speaking, the word "exemplary" or "for example" is used to be aimed at presenting the relevant concept in a concrete manner.

Additionally, the use of "based on" implies openness and inclusiveness, because a process, step, calculation, or other action "based on" one or more of the described conditions or values may, in practice, be based on additional conditions or values beyond those described.

With the development of a wireless communication technology, wireless communication services have become increasingly diverse. In addition to the three classic scenarios of the current 5th generation mobile networks (5G), namely enhanced mobile broadband (eMBB), ultra-reliable and low latency communications (uRLLC), and massive machine type communications (mMTC), various services such as immersive cloud extended reality (XR), multidimensional holography, autonomous driving, and industrial Internet services will also emerge in the future. The demand for future extreme service experience imposes higher requirements on networks, especially scenarios, such as XR and holographic communication, require simultaneous satisfaction of high throughput, low latency, and high reliability performance requirements.

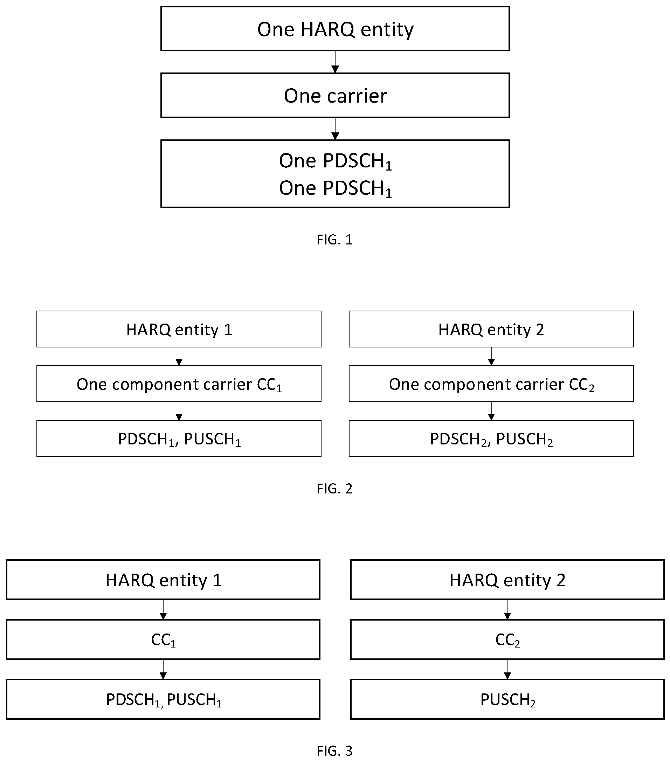

In a current 5G system, medium access control (MAC) layer is responsible for scheduling and resource allocation, and uses an HARQ mechanism for data packet transmission and reliability assurance. A MAC entity includes one HARQ entity, and each HARQ entity corresponds to one serving cell. One component carrier (CC) is bound with only one HARQ entity. Each HARQ entity manages a plurality of parallel HARQ processes, and data from different HARQ entities and different HARQ processes cannot be combined. A transport block (TB) is a basic unit for HARQ transmission in physical layer. When spatial multiplexing is not used, one HARQ process corresponds to one TB. When spatial multiplexing is used, one HARQ process corresponds to one or more TBs. In the physical layer, a physical downlink shared channel (PDSCH) is used for transmission of downlink TBs, and a physical uplink shared channel (PUSCH) is used for transmission of uplink TB data. For 5G single-carrier transmission, as shown in FIG. 1, each carrier corresponds to one HARQ entity, one PDSCH is used for downlink data transmission, and one PUSCH is used for uplink data transmission. For carrier aggregation (CA) transmission, a plurality of component carriers belong to different cells respectively, each CC corresponds to one HARQ entity, and one HARQ entity corresponds to one PDSCH₁ and one PUSCH₁. CA involves a plurality of cells and a plurality of HARQ entities. As shown in FIG. 2, under CA, different CCs correspond to different HARQ entities, and each HARQ entity only manages its own HARQ buffer and the scheduling of one CC.

To improve uplink performance, 5G also adopts a supplementary uplink (SUL) manner. For SUL transmission, there is one serving cell and a plurality of HARQ entities. Each serving cell has one downlink carrier (corresponding to one HARQ entity) and a plurality of uplink carriers (each uplink carrier corresponds to one HARQ entity, and the plurality of uplink carriers correspond to the plurality of HARQ entities), and respectively correspond to one PDSCH and a plurality of PUSCHs. As shown in FIG. 3, SUL ensures uplink coverage of user equipment (UE) by providing one supplementary uplink (generally in a low frequency band). The UE can dynamically select a sending link between a normal UL link and an SUL link. However, at the same moment, the UE can only select one of them for sending, and cannot send uplink data on two uplinks simultaneously. The downlink (DL), the UL and the SUL belong to the same cell. Similarly, 5G also supports a supplementary downlink (SDL) to improve downlink performance. The SDL has one serving cell and a plurality of downlink carriers (corresponding to a plurality of HARQ entities) and one uplink carrier (corresponding to one HARQ entity), and respectively corresponds to a plurality of PDSCHs and one PUSCH.

Due to the existence of multipath effect, path loss, channel fading and interference in a wireless environment, TB data may be lost or corrupted during transmission. In order to improve data reliability while ensuring the data transmission efficiency, the MAC layer uses a fast-retransmission HARQ mechanism. In the HARQ mechanism, an HARQ process is responsible for sending TB data through the physical layer. Each TB is allocated one available HARQ process, and each HARQ process has an independent HARQ buffer at a receiver. Through HARQ with soft combining, error data packets received are stored in one HARQ buffer and combined with subsequently received retransmission data packets, thereby obtaining a more reliable data packet. If decoding of the combined data packet fails, retransmission and recombining are requested again. Depending on whether retransmitted bit information is the same as that of original transmission (also referred to as initial transmission or first transmission), HARQ with soft combining is divided into two types of retransmission manners: chase combining and incremental redundancy (IR). In chase combining, the retransmitted bit information is the same as that of the original transmission. In IR, the retransmitted bit information may differ from that of the original transmission. In IR, a plurality of coded bit sets are generated, and the coded bit set transmitted each time becomes a redundancy version (RV). Through multiple retransmissions and soft combining of received data, the probability of successful decoding of the TBs is improved.

In 5G, each HARQ entity maintains its own HARQ buffer. Different HARQ entities do not share HARQ buffers, and the HARQ buffers of different HARQ entities cannot be directly accessed by each other. Regardless of the CA, the SUL or the SDL, as long as different HARQ entities are used, soft combining of HARQ information across carriers cannot be performed, which makes cross-carrier retransmission very difficult. For example, UE has two carriers available, i.e., a high-frequency carrier and a low-frequency carrier. However, data transmitted on the high-frequency carrier can only be retransmitted on that high-frequency carrier after failure. Even if the low-frequency carrier is idle, the data cannot be quickly placed on the low-frequency carrier for retransmission. Due to the low success rate of high-frequency retransmission and relatively large transmission latency, data transmission performance is not high.

In summary, the related art suffers from a problem of being unable to fully utilize carrier resources for efficient data transmission, resulting in poor data transmission performance. How to improve resource utilization of carrier resources in a data transmission process is an urgent problem to be solved.

Based on this, embodiments of the present disclosure provide an information transmission method, an apparatus, and a storage medium. A first node associates an HARQ entity with a physical shared channel set based on first control information, thereby achieving flexible selection of a physical shared channel for data transmission under one HARQ entity, solving the problem of not supporting cross-carrier data transmission, improving resource utilization of carrier resources in a data transmission process, and thus improving data transmission performance.

The solutions of the embodiments of the present disclosure are introduced below with reference to the accompanying drawings.

The technical solutions provided in the embodiments of the present disclosure may be applied to various mobile communication networks, for example, an NR mobile communication network using 5G, a future mobile communication network (such as a 6G wireless communication system), or a variety of communication convergence systems, etc., which are not limited in the embodiments of the present disclosure.

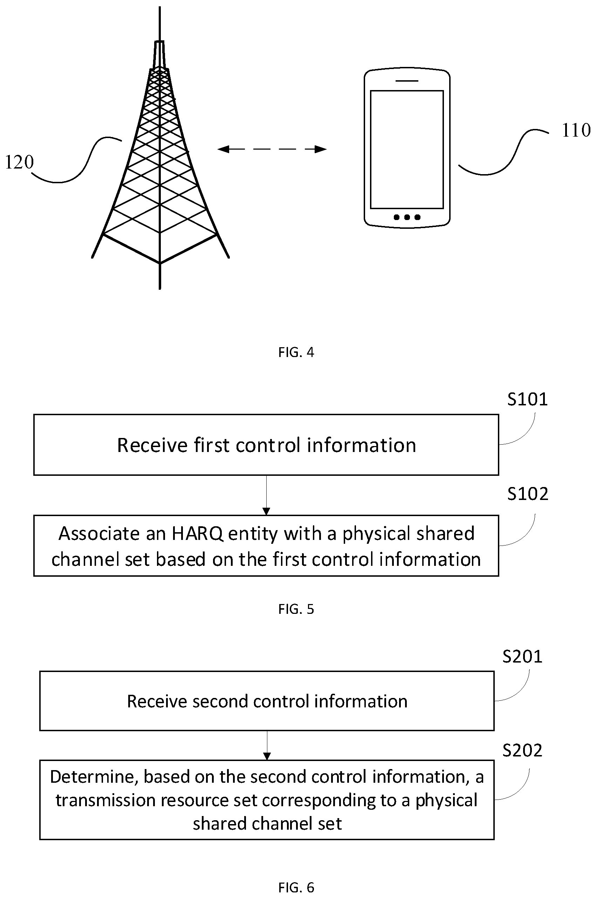

FIG. 4 shows a schematic structural diagram of a communication system provided by an embodiment of the present disclosure. As shown in FIG. 4, the communication system includes, but is not limited to, a first node 110 and a second node 120. Sending and reception of wireless signals, and related interactions can be performed between the first node 110 and the second node 120.

In a wireless communication scenario, the first node 110 communicates with the second node 120 via a wireless channel. For example, the first node 110 is a terminal, the second node 120 is a base station, and the terminal communicates with the base station via a wireless channel. For another example, the first node 110 is a terminal, the second node 120 is a wireless router, and the wireless router communicates with the terminal via a wireless channel. For another example, the first node 110 is a first base station, the second node 120 is a second base station, and the first base station communicates with the second base station via a wireless channel. For another example, the first node 110 is a first terminal, the second node 120 is a second terminal, and the first terminal communicates with the second terminal via a wireless channel. For another example, the first node 110 is a repeater, the second node 120 is a base station, and the base station communicates with the repeater via a wireless channel. For another example, the first node 110 is a terminal, the second node 120 is a repeater, and the repeater communicates with the terminal via a wireless channel. For another example, the first node 110 is a first repeater, the second node 120 is a second repeater, and the first repeater communicates with the second repeater via a wireless channel. For another example, the first node 110 is a base station, the second node 120 is a satellite, and the satellite communicates with the base station via a wireless channel. For another example, the first node 110 is a satellite, the second node 120 is a base station, and the base station communicates with the satellite via a wireless channel. For another example, the first node 110 is a terminal, the second node 120 is a satellite, and the satellite communicates with the terminal via a wireless channel. For another example, the first node 110 is a satellite, the second node 120 is a terminal, and the terminal communicates with the satellite via a wireless channel. For another example, the first node 110 is a ground device, the second node 120 is an aircraft, and the aircraft communicates with the ground device via a wireless channel. For another example, the first node 110 is a first aircraft, the second node 120 is a second aircraft, and the first aircraft communicates with the second aircraft via a wireless channel.

In the present disclosure, "first" node, "second" node, "first" manner, "second" manner, "first" method, "second" method, "first" matrix, "second" matrix, "first" part, "second" part, unless otherwise specified, are only used for descriptive distinction and do not represent order or sequence.

In the embodiments of the present disclosure, the first node and the second node may also have other names. For example, the first node may also be referred to as a first communication node, and the second node may also be referred to as a second communication node, which are not limited in the embodiments of the present disclosure.

In some embodiments, the above base station may be any node of an evolution node B (eNB), a generation node B (gNB), a transmission receive point (TRP), a transmission point (TP), and some other access nodes. According to a size of a service coverage area provided, a base station may be further classified into a macro base station for providing a macro cell, a pico base station for providing a pico cell, and a femto base station for providing a femto cell. With the continuous evolution of the wireless communication technology, future base stations may also adopt other names.

The above terminal may be a device with a wireless transceiver function, such as a mobile phone, a tablet computer, a wearable device, a vehicle-mounted device, an augmented reality (AR)/virtual reality (VR) device, a laptop computer, an ultra-mobile personal computer (UMPC), a netbook, a personal digital assistant (PDA), or the like. The embodiments of the present disclosure do not limit a specific type of the terminal.

It should be understood that FIG. 4 is an exemplary structural diagram, and the number of devices included in the communication system shown in FIG. 4 is not limited, for example, the number of first nodes and second nodes is not limited. Moreover, in addition to the devices shown in FIG. 4, the communication system shown in FIG. 4 may also include other devices, which is not limited herein.

Next, as shown in FIG. 5, an embodiment of the present disclosure provides an information transmission method. The method is applied to a first node, and the first node may be the first node 110 shown in FIG. 4. The method includes the following steps.

S101: first control information is received.

In some embodiments, to improve resource utilization of carrier resources in a data transmission process, after configuring the first control information, a second node may send the first control information to the first node. Correspondingly, the first node receives the first control information sent by the second node. The first control information is used for indicating an association relationship between one HARQ entity and one physical shared channel set. The second node may be the second node 120 shown in FIG. 4 above. For ease of description, the following description is uniformly based on an example where the first node is a terminal and the second node is a base station to illustrate the information transmission method provided by the embodiment of the present disclosure.

In some embodiments, the first control information is used for indicating the association relationship between one HARQ entity and one physical shared channel set, and may specifically be used for indicating an association relationship between one HARQ entity of the first node and one physical shared channel set. The physical shared channel set may also have other names, for example, a physical data channel list.

In some embodiments, the physical shared channel set includes at least one of the following: a plurality of PDSCHs, or a plurality of PUSCHs.

In some embodiments, all physical shared channels in the physical shared channel set associated with the HARQ entity are able to use an HARQ buffer of the HARQ entity in a shared manner.

In some embodiments, new transmission and retransmission of the same data packet under the HARQ entity are respectively carried on different physical shared channels in the physical shared channel set associated with the HARQ entity for transmission. New transmission may also have other names, for example, retransmission.

In some embodiments, the first control information includes at least one of the following: an HARQ entity identifier, a PDSCH identifier, a PUSCH identifier, a carrier identifier, an indication of a correspondence between the PDSCH identifier and the carrier identifier, an indication of a correspondence between the PUSCH identifier and the carrier identifier, a rule for the correspondence between the PDSCH identifier and the carrier identifier, or a rule for the correspondence between the PUSCH identifier and the carrier identifier.

In some embodiments, the first control information includes at least one of the following: a radio resource control (RRC) message, or downlink control information (DCI). The RRC message may be at least one of the following: an RRC connection establishment message, an RRC reconfiguration message, or an RRC forwarding message.

In some embodiments, the HARQ entity is any one of the following: an HARQ entity corresponding to one data radio bearer (DRB), an HARQ entity corresponding to a plurality of DRBs, or an HARQ entity corresponding to a plurality of DRBs after being multiplexed in MAC layer.

S102: the HARQ entity is associated with the physical shared channel set based on the first control information.

In some embodiments, after receiving the first control information, the first node may associate one HARQ entity of the first node with a plurality of physical shared channels in the physical shared channel set based on the first control information, that is, an association relationship between one HARQ entity of the first node and the plurality of physical shared channels in the physical shared channel set is established.

As an example, taking the first control information being an RRC message as an example, the first node associates one HARQ entity of the first node with the physical shared channel set based on the RRC message. Taking an example where the first control information is specifically an RRC reconfiguration message in an RRC message, the RRC reconfiguration message indicates a specific association relationship between one HARQ entity of the first node and the physical shared channel set, and the first node may associate the HARQ entity with the physical shared channel set based on the specific association relationship between the HARQ entity and the physical shared channel set. For example, the RRC reconfiguration message contains indication information for two pairs of physical shared channels (PDSCH₁, PUSCH₁) and (PDSCH₁, PUSCH₂) associated with HARQ entity 1. For another example, the RRC reconfiguration message contains indication information for one pair of regular transmission links (PDSCH₁, PUSCH₁) and one supplementary transmission link (PUSCH₂) associated with HARQ entity 1.

As another example, taking the first control information being an RRC message as an example, the RRC message (e.g., an RRC connection establishment message) may enable the first node to associate and disassociate the HARQ entity with the physical shared channel set. The first node may associate one HARQ entity of the first node with the physical shared channel set by receiving the RRC message. The first node may release the association relationship between one HARQ entity of the first node and the physical shared channel set by receiving the RRC message.

As another example, taking the first control information being DCI as an example, the DCI enables the first node to dynamically associate and disassociate the HARQ entity with the physical shared channel set in real time. The first node may associate one HARQ entity of the first node with the physical shared channel set by receiving the DCI. The first node may release the association relationship between one HARQ entity of the first node and the physical shared channel set by receiving the DCI.

Based on the embodiment shown in FIG. 5, the first node associates the HARQ entity with the physical shared channel set based on the first control information, thereby achieving flexible selection of the physical shared channel for data transmission under one HARQ entity, solving the problem of not supporting the cross-carrier data transmission, improving resource utilization of carrier resources in the data transmission process, and thus improving the data transmission performance.

In some embodiments, as shown in FIG. 6, the method may further include the following steps.

S201: second control information is received.

The second control information is used for indicating a corresponding relationship between physical shared channels in the physical shared channel set and transmission resources in a transmission resource set.

In some embodiments, the transmission resource set includes a plurality of transmission resources, and the transmission resources include at least one of the following: a carrier, a bandwidth part (BWP), a cell, a beam, or a transmit/receive point (TRP). The transmission resource set may also have other names, for example, a service resource list.

In some embodiments, the transmission resource set includes at least one of the following: a carrier set, a BWP set, a cell set, a beam set, or a TRP set, wherein the number of carriers included in the carrier set is greater than 1, the BWP set includes a plurality of BWPs located on different carriers, and the beam set includes a plurality of spatial beams belonging to different carriers.

In some embodiments, the second control information includes indication information from a physical shared channel to a transmission resource. The second control information includes at least one of the following: an HARQ entity identifier, a PDSCH identifier, a PUSCH identifier, a transmission resource identifier, an indication of a correspondence between the PDSCH identifier and the transmission resource identifier, an indication of a correspondence between the PUSCH identifier and the transmission resource identifier, a rule for the correspondence between the PDSCH identifier and the transmission resource identifier, or a rule for the correspondence between the PUSCH identifier and the transmission resource identifier.

In some embodiments, the second control information includes at least one of the following: an RRC message, or DCI. The RRC message may be at least one of the following: an RRC connection establishment message, an RRC reconfiguration message, or an RRC forwarding message.

As another example, taking the second control information being an RRC message as an example, the RRC message may enable the first node to dynamically associate and disassociate the physical shared channel set with the transmission resource set in real time. The first node may associate the physical shared channel set with the transmission resource set of the first node by receiving the RRC message. The first node may release the association relationship between the physical shared channel set and the transmission resource set of the first node by receiving the RRC message.

As another example, taking the second control information being DCI as an example, the DCI may enable the first node to dynamically associate and disassociate the physical shared channel set with the transmission resource set in real time. The first node may associate the physical shared channel set with the transmission resource set of the first node by receiving the DCI. The first node may release the association relationship between the physical shared channel set and the transmission resource set of the first node by receiving the DCI.

S202: the transmission resource set corresponding to the physical shared channel set is determined based on the second control information.

In some embodiments, in a case where the first node associates the HARQ entity with the physical shared channel set based on the first control information, after receiving the second control information, the first node may determine, based on the second control information, the transmission resource set corresponding to the physical shared channel set, that is, determine an association relationship between the physical shared channel set and the transmission resource set.

In some embodiments, in a case where the first node determines, based on the second control information, the transmission resource set corresponding to the physical shared channel set, after receiving the first control information, the first node may determine, based on the first control information, the association between the HARQ entity and the physical shared channel set.

In some embodiments, in a case where the first node associates the HARQ entity with the physical shared channel set based on the first control information and determines, based on the second control information, the transmission resource set corresponding to the physical shared channel set, the first node associates the HARQ entity with the transmission resource.

In some embodiments, the first control information and the second control information are two independent control signaling messages, and the first node receives the first control information and the second control information separately. For example, the first control information and the second control information are two RRC messages respectively. For example, the first control information and the second control information are two DCI messages respectively. For another example, the first control information is an RRC message, and the second control information is a DCI message. For another example, the first control information is a DCI message, and the second control information is an RRC message.

In some embodiments, the first control information and the second control information correspond to one control signaling message, and the first node receives one control signaling message containing the first control information and the second control information. For example, the first control information and the second control information belong to one RRC message. For another example, the first control information and the second control information belong to one DCI message.

It should be understood that after the first node determines the transmission resource set corresponding to the physical shared channel set, it means that all physical shared channels in the physical shared channel set can use the transmission resources included in the transmission resource set. For example, if the transmission resource set includes carrier resources, after determining the transmission resource set corresponding to the physical shared channel set, the first node can learn on which carrier resources each physical shared channel is carried, thereby achieving flexible selection of the physical shared channel and flexible selection of the transmission resource under one HARQ entity for data transmission, improving resource utilization of the carrier resources in the data transmission process, and thus improving the data transmission performance.

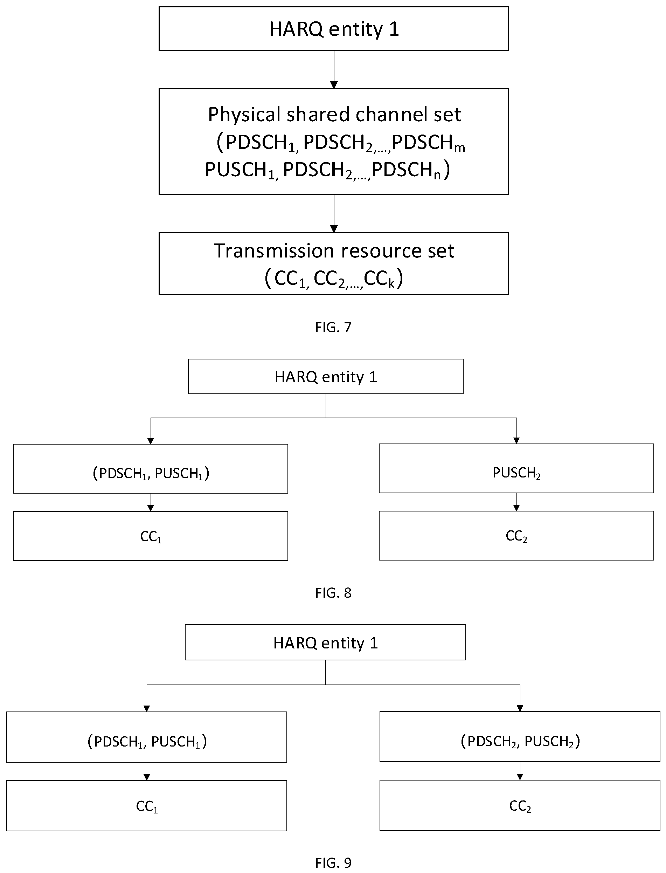

Taking an example where the physical shared channel set includes m PDSCHs and n PUSCHs, and the transmission resource set includes k carriers. That is, in the embodiment of the present disclosure, under one HARQ entity, m PDSCHs and n PUSCHs correspond to k carriers. m and n may each be an integer greater than or equal to 0, m and n are not both 0, and k is a positive integer. It should be understood that in a case where the first node associates the HARQ entity with the physical shared channel set, and associates the HARQ entity with the transmission resource set, the first node can learn which carrier among the k carriers is used by each physical shared channel among the m PDSCHs and n PUSCHs under one HARQ entity. As shown in FIG. 7, FIG. 7 is a schematic diagram of an association relationship among an HARQ entity, a physical shared channel set, and a transmission resource set provided by an embodiment of the present disclosure. Referring to FIG. 7, taking an example where the physical shared channel set includes PDSCH₁-PDSCHₘ and PUSCH₁-PUSCHₙ, the carrier is a component carrier (CC), and the transmission resource set includes CC₁-CCₖ, the association relationship among the HARQ entity, the physical shared channel set, and the transmission resource set may be that HARQ entity 1 is associated with PDSCH₁-PDSCHₘ, and PUSCH₁-PUSCHₙ, and PDSCH₁-PDSCHₘ and PUSCH₁-PUSCHₙ are associated with CC₁-CCₖ.

The following describes the association relationship among one HARQ entity, the physical shared channel set, and the transmission resource set with reference to examples. Exemplarily, taking an example where the physical shared channel set includes m PDSCHs and n PUSCHs, and the transmission resource is a carrier, the HARQ entity is associated with the physical shared channel set, that is, one HARQ entity is associated with m PDSCHs and n PUSCHs. The m PDSCHs may be transmitted using less than or equal to m different carriers, respectively. The n PUSCHs are transmitted using less than or equal to n different carriers, respectively. In some embodiments, the m PDSCHs may be transmitted using the same carrier or may be transmitted using different carriers. The n PUSCHs may be transmitted using the same carrier or may be transmitted using different carriers. In some embodiments, for each PDSCH and each PUSCH, they may be transmitted using the same carrier or using different carriers. That is to say, by associating one HARQ entity with the physical shared channel set and the transmission resource set, a combination of corresponding relationships may be formed by one HARQ entity with any physical shared channel in the physical shared channel set and any transmission resource in the transmission resource set.

When m is equal to 0 and n is greater than 0, data transmission of downlink only (DL only) is formed, that is, the HARQ entity is only associated with one or more PDSCHs but not associated with the PUSCH.

When m is greater than 0 and n is equal to 0, data transmission of UL only is formed, that is, the HARQ entity is only associated with one or more PUSCHs but not associated with the PDSCH.

When m is equal to 1 and n is greater than 1, it indicates that the HARQ entity is simultaneously associated with one PDSCH and a plurality of PUSCHs. Exemplarily, as shown in FIG. 8, FIG. 8 is a schematic diagram of another association relationship among an HARQ entity, a physical shared channel set, and a transmission resource set provided by an embodiment of the present disclosure. Referring to FIG. 8, in a case where one physical shared channel corresponds to one carrier, this case is similar to 5G SUL transmission, but the difference is that only one HARQ entity is used here.

When m is greater than 1 and n is equal to 1, it indicates that the HARQ entity is simultaneously associated with a plurality of PDSCHs and one PUSCH. In a case where one physical shared channel corresponds to one carrier, this case is similar to 5G SDL transmission, but the difference is that only one HARQ entity is used here.

When m is greater than 1 and n is greater than 1, it indicates that the HARQ entity is simultaneously associated with a plurality of PDSCHs and a plurality of PUSCHs. Exemplarily, as shown in FIG. 9, FIG. 9 is a schematic diagram of another association relationship among an HARQ entity, a physical shared channel set, and a transmission resource set provided by an embodiment of the present disclosure. Referring to FIG. 9, in a case where the HARQ entity is simultaneously associated with a plurality of PDSCHs and a plurality of PUSCHs, this case is similar to 5G CA transmission, but the difference is that only one HARQ entity is used here.

It should be understood that in a case where one HARQ entity is associated with one physical shared channel set, flexibility of data transmission can be improved.

As an example, in a case where one HARQ entity is associated with one physical shared channel set and the transmission resource set corresponding to the physical shared channel set is determined, cross-carrier retransmission may be performed on the same TB data. After the TB data fails to be transmitted on one carrier, if retransmission of the TB data is continued on that carrier, a retransmission success rate may be relatively low. In this way, retransmission of the TB data that has failed in transmission may be placed on another carrier of the same HARQ entity for transmission, and at a receiver, one HARQ buffer may be used and soft combining of information may be performed to improve a decoding success rate.

As another example, in a case where one HARQ entity is associated with one physical shared channel set and the transmission resource set corresponding to the physical shared channel set is determined, since the physical shared channel set uses the same HARQ entity, flexible splitting of one data stream in the physical layer may be supported. For example, different TB data of the same data stream may be transmitted on different physical shared channels, and different TB data of the same data stream may be transmitted on different carriers.

In some embodiments, the second control information includes at least one of the following: an RRC message, or DCI. Taking the second control information being an RRC message (e.g., an RRC reconfiguration message) as an example, the first node determines, based on the second control information, the transmission resource set corresponding to the physical shared channel set, which may mean that the first node obtains, based on the RRC message, the transmission resource corresponding to each physical shared channel in the physical shared channel set. For example, PDSCH₁ and PDSCH₁ both correspond to carrier 1 (CC₁), and PDSCH₂ and PDSCH₂ both correspond to carrier 2 (CC₂). Taking the second control information being DCI as an example, the first node determines, based on the second control information, the transmission resource set corresponding to the physical shared channel set, which may mean that the first node performs, based on the DCI, a correspondence between the physical shared channels in the physical shared channel set and the transmission resources in the transmission resource set. It should be understood that DCI enables the first node to dynamically establish and release the corresponding relationship between the physical shared channel set and the transmission resource set in real time.

In some embodiments, after the first node associates the HARQ entity with the physical shared channel set based on the first control information, or after the first node determines, based on the second control information, the transmission resource set corresponding to the physical shared channel set, the first node may associate the HARQ entity with the transmission resource set, that is, establish the association relationship between the HARQ entity and the transmission resource set.

As a possible example, the first node associates the HARQ entity with the physical shared channel set and associates the HARQ entity with the transmission resource set, which may mean that a MAC entity of the first node associates the HARQ entity with the physical shared channel set and associates the HARQ entity with the transmission resource set.

For example, taking the transmission resource being a carrier as an example, assuming that one HARQ entity is associated with two pairs of uplink and downlink physical shared channels (PDSCH₁, PUSCH₁) and (PDSCH₂, PUSCH₂), (PDSCH₁, PUSCH₁) corresponds to carrier 1 (CC1), and (PDSCH₂, PUSCH₂) corresponds to carrier 2, continuing to refer to FIG. 9 above, it can be seen that HARQ entity 1 may also correspond to carrier 1 (CC₁) and carrier 2 (CC₂), that is, HARQ entity 1 is also associated with CC₁ and CC₂.

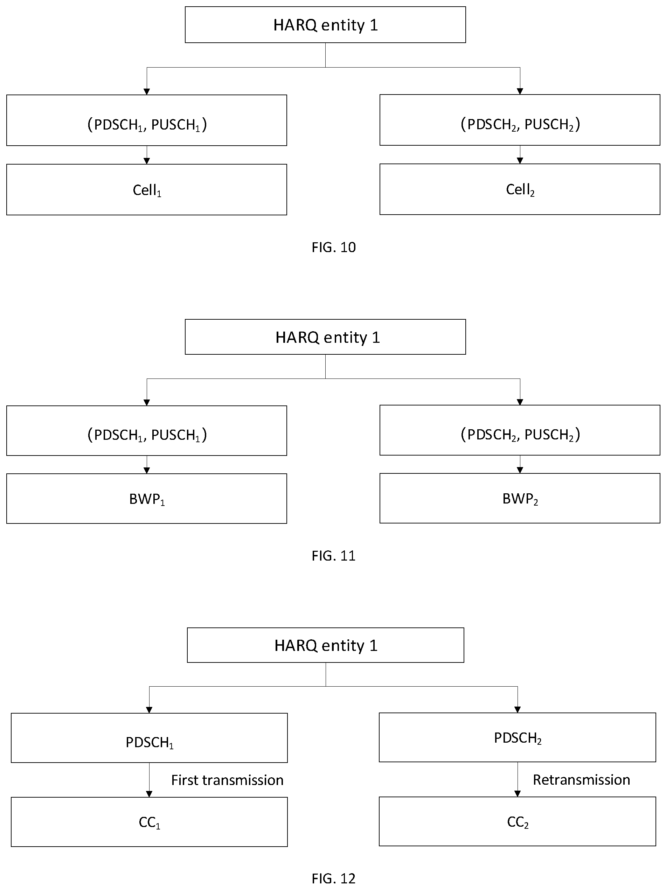

For another example, taking the transmission resource being a cell as an example, if the transmission resource set includes a plurality of logical cells, then one HARQ entity may correspond to a plurality of logical cells, wherein the plurality of logical cells may be a plurality of logical cells corresponding to different carriers. Exemplarily, as shown in FIG. 10, FIG. 10 is a schematic diagram of another association relationship among an HARQ entity, a physical shared channel set, and a transmission resource set provided by an embodiment of the present disclosure. Referring to FIG. 10, HARQ entity 1 may be associated with (PDSCH₁, PUSCH₁) and (PDSCH₂, PUSCH₂), (PDSCH₁, PUSCH₁) is associated with cell 1 (Cell₁), and (PDSCH₂, PUSCH₂) is associated with cell 2 (Cell₂), then HARQ entity 1 may be associated with Cell₁ and Cell₂.

For another example, taking the transmission resource being a BWP as an example, if the transmission resource set includes a plurality of BWPs, then one HARQ entity may correspond to a plurality of BWPs, wherein the plurality of BWPs may be located in different carriers. Exemplarily, as shown in FIG. 11, FIG. 11 is a schematic diagram of another association relationship among an HARQ entity, a physical shared channel set, and a transmission resource set provided by an embodiment of the present disclosure. Referring to FIG. 11, HARQ entity 1 may be associated with (PDSCH₁, PUSCH₁) and (PDSCH₂, PUSCH₂), (PDSCH₁, PUSCH₁) is associated with BWP₁, and (PDSCH₂, PUSCH₂) is associated with BWP₂, then HARQ entity 1 may be associated with BWP₁ and BWP₂. BWP₁ and BWP₂ may be located in different carriers. In some embodiments, BWP₁ and BWP₂ are two activated BWPs corresponding to HARQ entity 1. It should be understood that since one HARQ entity has two activated BWPs, multiple data transmission manners can be supported, such as simultaneous transmission of the same data packet on different BWPs, simultaneous transmission of different data packets under the same data stream on different BWPs, and new transmission of the same data packet on one BWP and retransmission on another BWP.

In some embodiments, in a case where the first node associates the HARQ entity with the physical shared channel set and associates the HARQ entity with the transmission resource set, all transmission resources in the transmission resource set associated with the HARQ entity can be used for transmitting data in the HARQ buffer of the HARQ entity.

In some embodiments, in a case where the first node associates the HARQ entity with the physical shared channel set and associates the HARQ entity with the transmission resource set, the new transmission and retransmission of the same data packet under the HARQ entity are respectively carried on different transmission resources in the transmission resource set associated with the HARQ entity for transmission.

It should be understood that a high-frequency carrier may use a large bandwidth for high-throughput transmission, but a high-frequency carrier also has disadvantages such as short propagation distance, susceptibility to interference, and susceptibility to blockage, resulting in a low retransmission success rate on the high-frequency carrier. A low-frequency carrier has large coverage, strong penetration, and strong interference resistance, resulting in a high data transmission success rate, but a low-frequency carrier has a small bandwidth and cannot support high-speed data transmission. If the new transmission of a data packet is performed on a high-frequency carrier, and the retransmission of the data packet is performed on a low-frequency carrier, both high-speed data transmission and a high retransmission success rate can be achieved. It can be seen that this manner is beneficial for high-throughput and high-reliability scenarios.

As an example, taking a data packet being TB data as an example, as shown in FIG. 12, FIG. 12 is a schematic diagram of cross-carrier retransmission provided by an embodiment of the present disclosure. Referring to FIG. 12, under the same HARQ entity, PDSCH₁ uses a high-frequency carrier, and PDSCH₂ uses a low-frequency carrier. In a case where TB data transmission on PDSCH₁ fails on a high-frequency carrier, retransmission of the failed TB data may be performed on PDSCH₂ to use a low-frequency carrier for transmission. Since PDSCH₁ and PDSCH₂ use the same HARQ entity, data transmitted on the two channels at the receiver may be subjected to soft combining of information to increase the decoding success rate. Moreover, since PDSCH₁ and PDSCH₂ use the same HARQ entity, the HARQ buffers corresponding to PDSCH₁ and PDSCH₂ are also the same. Retransmission of the failed TB data may be transmission of the same RV version or different RV versions of the TB data. That is to say, since PDSCH₁ and PDSCH₂ use the same HARQ entity, a plurality of physical downlink shared channels may share a downlink HARQ buffer for soft combining of bits.

In some embodiments, an RRC message may be used to configure the association relationship between the HARQ entity and the physical shared channel set, and the corresponding relationship between each physical shared channel in the physical shared channel set and a carrier. For example, an RRC message may be used to configure the association relationship between HARQ entity 1 and PDSCH₁ as well as PDSCH₂, and the corresponding relationship between PDSCH₁ using a high-frequency carrier and PDSCH₂ using a low-frequency carrier.

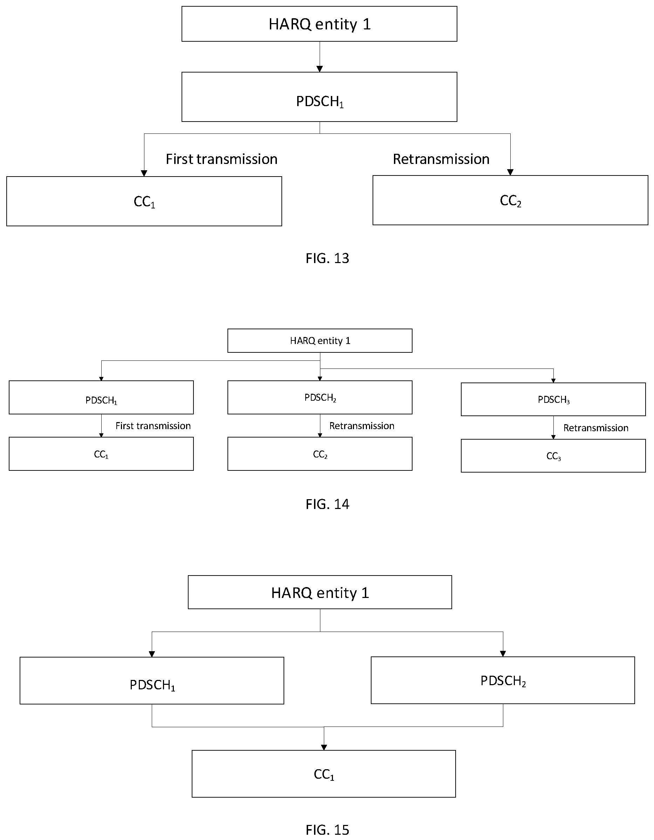

As another example, for each physical shared channel in the physical shared channel set associated with the HARQ entity, the physical shared channel may perform data transmission using a high-frequency carrier and a low-frequency carrier in different slots, respectively. For example, taking an example where the physical shared channel is PDSCH₁ and the data packet is TB data, as shown in FIG. 13, FIG. 13 is a schematic diagram of another cross-carrier retransmission provided by an embodiment of the present disclosure. Referring to FIG. 13, for PDSCH₁ associated with HARQ entity 1, PDSCH₁ may use a high-frequency carrier and a low-frequency carrier in different slots for data transmission, respectively. When TB transmission on PDSCH₁ using a high-frequency carrier fails on one HARQ process, the failed TB may be placed on an HARQ process corresponding to retransmission of PDSCH1 for retransmission using a low-frequency carrier. Alternatively, as shown in FIG. 14, FIG. 14 is a schematic diagram of another cross-carrier retransmission provided by an embodiment of the present disclosure. Referring to FIG. 14, for PDSCH₁ associated with HARQ entity 1, when TB transmission on PDSCH₁ using CC₁ fails, a plurality of RV versions of the TB failed for transmission may be retransmitted on a plurality of CCs. For example, the same RV version is transmitted on CC₂ and CC₃, or different RV versions are transmitted on CC₂ and CC₃.

In some embodiments, to improve transmission performance of uplink transmission, the first node may perform cross-carrier retransmission of uplink transmission. Cross-carrier retransmission of uplink transmission by the first node may also be performed using the corresponding relationship between physical shared channels and transmission resources as shown in FIG. 12 to FIG. 14 described above. It should be understood that placing the new transmission of the data packet on the high-frequency carrier can utilize sufficient bandwidth resources of the high-frequency carrier for high-speed transmission of the data packet, while placing the retransmission of the data packet on the low-frequency carrier can take advantages of the low path loss and strong anti-interference capability of the low-frequency carrier to improve reliability of data transmission.

In some embodiments, in a case where the first node associates the HARQ entity with the physical shared channel set and associates the HARQ entity with the transmission resource set, the information transmission method provided by the embodiment of the present disclosure supports not only transmission of the plurality of physical shared channels on different transmission resources under one HARQ entity, but also transmission of the plurality of physical shared channels on the same transmission resource under one HARQ entity. For example, taking an example where the physical shared channel set includes two PDSCHs (PDSCH₁ and PDSCH₂) and the transmission resource set includes one carrier (CC₁), as shown in FIG. 15, FIG. 15 is a schematic diagram of an association between a carrier and a physical shared channel provided by an embodiment of the present disclosure. Referring to FIG. 15, it indicates that two PDSCHs under one HARQ entity 1 are both transmitted on one carrier. That is, the first node may simultaneously perform data transmission on two downlink links. For high-throughput services such as XR, utilizing large-bandwidth resources on a certain carrier to simultaneously transmit a plurality of physical shared channels can increase a data transmission rate. For another example, taking an example where the physical shared channel set includes two PUSCHs and the transmission resource set includes one carrier, it indicates that two PUSCHs under one HARQ entity are both transmitted on one carrier, that is, the first node may simultaneously perform data transmission on two uplinks.

In some embodiments, in a case where the first node associates the HARQ entity with the physical shared channel set and associates the HARQ entity with the transmission resource set, uplink data and downlink data under the HARQ entity are respectively transmitted using different transmission resources in the transmission resource set associated with the HARQ entity; or, uplink data and downlink data under the HARQ entity are respectively transmitted using the same transmission resource in the transmission resource set associated with the HARQ entity. Taking an example where the uplink data and the downlink data under the HARQ entity are respectively transmitted using the different transmission resources in the transmission resource set associated with the HARQ entity, as an example, an identifier of the transmission resources used for the uplink data is different from an identifier of the transmission resources used for the downlink data; and/or, the number of the transmission resources used for the uplink data is different from the number of the transmission resources used for the downlink data. For example, taking the transmission resource being a carrier as an example, for uplink data, one HARQ entity may use four carriers for transmission, and for downlink data, one HARQ entity may use one carrier for transmission.

In some embodiments, different HARQ processes under one HARQ entity use different physical shared channels or different transmission resources. For example, among a plurality of HARQ processes of HARQ entity 1, some HARQ processes use PDSCH1, and some HARQ processes use PDSCH2. For example, among a plurality of HARQ processes of HARQ entity 1, some HARQ processes use carrier 1 and carrier 2, and some HARQ processes use carrier 2 and carrier 3. For example, among a plurality of HARQ processes of HARQ entity 1, some HARQ processes use BWP1 and BWP2, and some HARQ processes use BWP2 and BWP3. For example, among a plurality of HARQ processes of HARQ entity 1, some HARQ processes use beam 1, and some HARQ processes use beam 2. For example, among a plurality of HARQ processes of HARQ entity 1, some HARQ processes belong to data transmission of cell 1, and some HARQ processes belong to data transmission of cell 2. That is to say, for the same HARQ entity, the same data packet can undergo first transmission and retransmission on different transmission resources, and soft combining of information after decoding of first transmission and retransmission using the same HARQ buffer is supported.

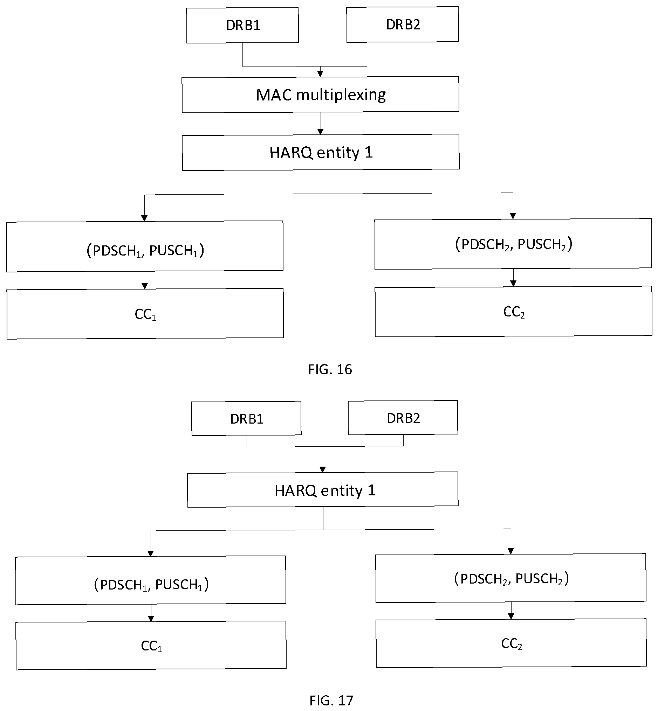

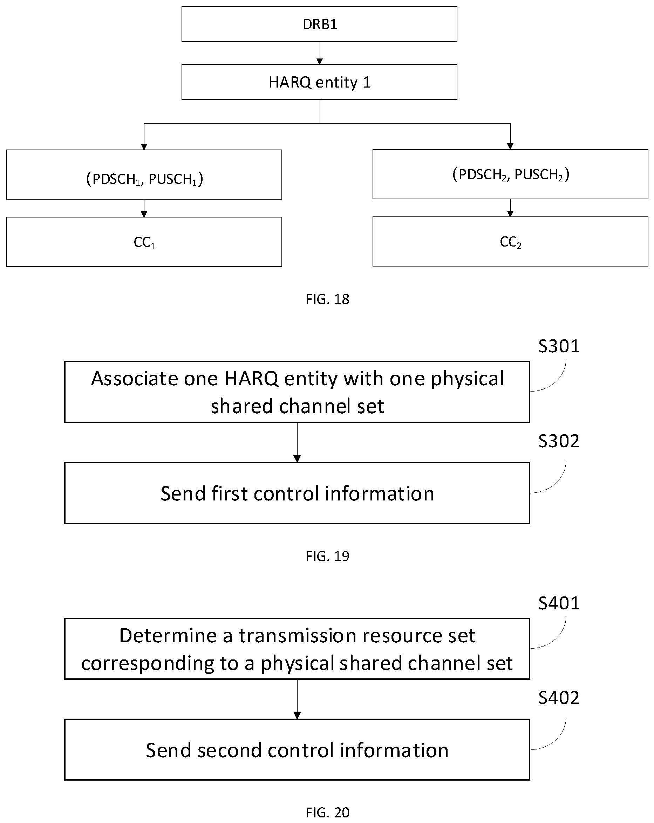

In some embodiments, a DRB corresponds to an HARQ entity using different transmission resources. In 5G, the MAC layer multiplexes data from a plurality of DRBs together and provides them to one HARQ entity. In this manner, data of different DRBs cannot be distinguished in the physical layer, making it difficult for services to obtain differentiated guarantees in the physical layer. In the embodiment of the present disclosure, it is proposed that one DRB corresponds to one HARQ entity, and cross-carrier transmission of data of one DRB is achieved by associating the HARQ entity with the physical shared channel set and by correspondence between the physical shared channel set and the transmission resource set. For example, for low-speed data services, correspondence of a plurality of DRBs to one HARQ entity is used; and for high-speed data services, correspondence of one DRB to one HARQ entity is used. Regardless of which correspondence manner of the DRB to the HARQ entity is used, cross-transmission-resource (e.g., cross-carrier retransmission) data transmission may be performed by using association of the HARQ entity with the physical shared channel set and the correspondence between the physical shared channel set and the transmission resource set. Taking the transmission resource being a carrier as an example, FIG. 16 gives a schematic diagram of a transmission resource association under one HARQ entity multiplexed by a plurality of DRBs, and FIG. 17 gives a schematic diagram of a transmission resource association under one HARQ entity corresponding to a plurality of DRBs. FIG. 18 gives a schematic diagram of a transmission resource association under one HARQ entity corresponding to one DRB.

Based on the embodiment shown in FIG. 6, after the first node determines the transmission resource set corresponding to the physical shared channel set, it means that all physical shared channels in the physical shared channel set can use the transmission resources included in the transmission resource set. The first node can learn on which transmission resources each physical shared channel is carried, thereby achieving flexible selection of the physical shared channel and flexible selection of the transmission resource under one HARQ entity for data transmission, improving resource utilization of the carrier resources in the data transmission process, and thus improving the data transmission performance.

In some embodiments, as shown in FIG. 19, an embodiment of the present disclosure further provides an information transmission method. The method is applied to a second node, and the second node may be the second node 120 shown in FIG. 4 above. The method may include the following steps.

S301: one HARQ entity is associated with one physical shared channel set.

In some embodiments, to improve resource utilization of carrier resources in a data transmission process, the second node may associate one HARQ entity with one physical shared channel set. The second node associates the HARQ entity with one physical shared channel set, which may mean that the second node associates one HARQ entity of a first node with one physical shared channel set, that is, the second node establishes an association relationship between one HARQ entity of the first node and one physical shared channel set. For the description of the HARQ entity and one physical shared channel set, reference may be made to the corresponding description in the embodiment shown in FIG. 5 above, which is omitted here.

S302: first control information is sent.

The first control information is used for indicating an association relationship between one HARQ entity and one physical shared channel set.

In some embodiments, the first control information includes at least one of the following: an RRC message, or DCI. The RRC message may be at least one of the following: an RRC establishment message, an RRC reconfiguration message, or an RRC forwarding message.

For the description of the first control information, reference may be made to the corresponding description in the embodiment shown in FIG. 5 above, which is omitted here.

It should be understood that after associating one HARQ entity with one physical shared channel set, the second node sends the first control information to the first node, so that the first node associates the HARQ entity with the physical shared channel set based on the first control information, thereby achieving flexible selection of the physical shared channel for data transmission under one HARQ entity, solving the problem of not supporting the cross-carrier data transmission, improving resource utilization of carrier resources in the data transmission process, and thus improving the data transmission performance.

In some embodiments, as shown in FIG. 20, the method may further include the following steps.

S401: a transmission resource set corresponding to the physical shared channel set is determined.

In some embodiments, in a case where the second node associates one HARQ entity with one physical shared channel set, the second node may determine the transmission resource set corresponding to the physical shared channel set. For the description of the transmission resource set, reference may be made to the corresponding description in the embodiment shown in FIG. 6 above, which is omitted here.

S402: second control information is sent.

The second control information is used for indicating a corresponding relationship between physical shared channels in the physical shared channel set and transmission resources in a transmission resource set.

In some embodiments, the second control information includes at least one of the following: an RRC message, or DCI. The RRC message may be at least one of the following: an RRC establishment message, an RRC reconfiguration message, or an RRC forwarding message.

For the description of the second control information, reference may be made to the corresponding description in the embodiment shown in FIG. 6 above, which is omitted here.

It should be understood that after determining the transmission resource set corresponding to the physical shared channel set, the second node sends the second control information to the first node, so that the first node determines, based on the second control information, the transmission resource set corresponding to the physical shared channel set, and then the first node can learn on which transmission resources each physical shared channel is carried, thereby achieving flexible selection of the physical shared channel and flexible selection of the transmission resource under one HARQ entity for data transmission, improving resource utilization of the carrier resources in the data transmission process, and thus improving the data transmission performance.

In some embodiments, after the second node associates one HARQ entity with one physical shared channel set, or after the second node determines the transmission resource set corresponding to the physical shared channel set, the second node may also associate the HARQ entity with the transmission resource set, that is, associate one HARQ entity of the first node with the transmission resource set. In this way, the first node and the second node have a consistent understanding of the transmission resource set having an association relationship with one HARQ entity of the first node, thereby helping to improve the data transmission effect.

In some embodiments, the first control information and the second control information are two independent control signaling messages, and the second node sends the first control information and the second control information separately. For example, the first control information and the second control information are two RRC messages respectively. For example, the first control information and the second control information are two DCI messages respectively. For another example, the first control information is an RRC message, and the second control information is a DCI message. For another example, the first control information is a DCI message, and the second control information is an RRC message.

In some embodiments, the first control information and the second control information correspond to one control signaling message, and the second node sends one control signaling message containing the first control information and the second control information. For example, the first control information and the second control information belong to one RRC message. For example, the first control information and the second control information belong to one DCI message.

As an example, the second node associates one HARQ entity with one physical shared channel set and associates the HARQ entity with the transmission resource set, which may mean that a MAC entity of the second node associates one HARQ entity with one physical shared channel set and associates the HARQ entity with the transmission resource set.

The above mainly introduces the solutions provided by the present disclosure from the perspective of interaction between various nodes. It should be understood that each node, for example, the first node or the second node, includes hardware structures and/or software modules corresponding to execution of each function so as to implement the above functions. Those skilled in the art should readily appreciate that, in combination with the algorithm steps of the examples described in the embodiments disclosed herein, the present disclosure can be implemented in the form of hardware, or a combination of hardware and computer software. Whether a certain function is executed in a mode of hardware or a mode of driving the hardware by the computer software depends on a specific application and design constraint conditions of the technical solutions. Professional technicians may use different methods to implement the described functions for each particular application, but such implementation is not to be regarded beyond the scope of the present disclosure.

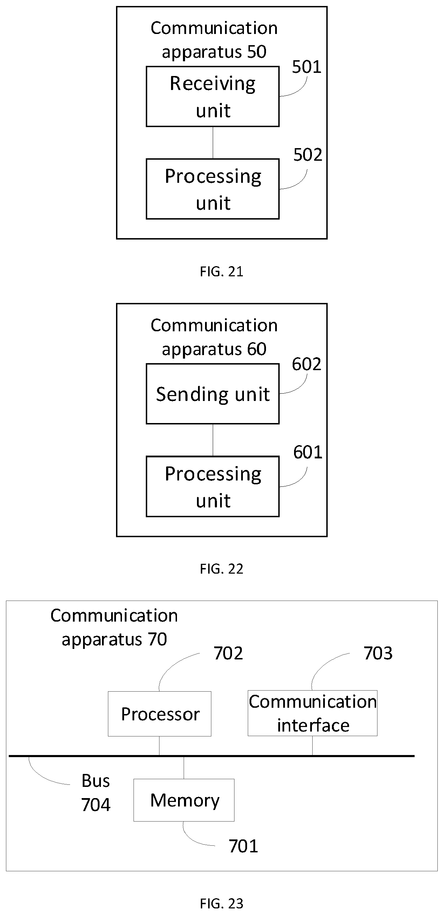

FIG. 21 shows a schematic composition diagram of a communication apparatus provided by an embodiment of the present disclosure. As shown in FIG. 21, the communication apparatus 50 includes a receiving unit 501 and a processing unit 502.

The communication apparatus 50 may be the above first node or a chip in the first node. When the communication apparatus 50 is configured to implement the functions of the first node in the above embodiments, each unit is specifically configured to implement the following functions.

The receiving unit 501 is configured to receive first control information, wherein the first control information is used for indicating an association relationship between one hybrid automatic repeat request (HARQ) entity and one physical shared channel set.

The processing unit 502 is configured to associate the HARQ entity with the physical shared channel set based on the first control information.

In some embodiments, the receiving unit 501 is configured to receive second control information, wherein the second control information is used for indicating a corresponding relationship between physical shared channels in the physical shared channel set and transmission resources in a transmission resource set.

The processing unit 502 is configured to determine, based on the second control information, the transmission resource set corresponding to the physical shared channel set.

In some embodiments, the processing unit 502 is further configured to associate the HARQ entity with the transmission resource set.

In some embodiments, the physical shared channel set includes at least one of the following: a plurality of physical downlink shared channels (PDSCHs), or a plurality of physical uplink shared channels (PUSCHs).

In some embodiments, the transmission resource set includes a plurality of transmission resources, and the transmission resources include at least one of the following: a carrier, a bandwidth part (BWP), a cell, a beam, or a transmit/receive point (TRP).

In some embodiments, the transmission resource set includes at least one of the following: a carrier set, a BWP set, a cell set, a beam set, or a TRP set, wherein the number of carriers included in the carrier set is greater than 1, the BWP set includes a plurality of BWPs located on different carriers, and the beam set includes a plurality of spatial beams belonging to different carriers.

In some embodiments, all physical shared channels in the physical shared channel set associated with the HARQ entity are able to use an HARQ buffer of the HARQ entity in a shared manner.

In some embodiments, all the transmission resources in the transmission resource set associated with the HARQ entity are able to be used for transmitting data in the HARQ buffer of the HARQ entity.

In some embodiments, new transmission and retransmission of the same data packet under the HARQ entity are respectively carried on different physical shared channels in the physical shared channel set associated with the HARQ entity for transmission.

In some embodiments, the new transmission and retransmission of the same data packet under the HARQ entity are respectively performed using different transmission resources in the transmission resource set associated with the HARQ entity for transmission, or, uplink data and downlink data under the HARQ entity are respectively transmitted using the same transmission resource in the transmission resource set associated with the HARQ entity.

In some embodiments, the uplink data and the downlink data under the HARQ entity are respectively transmitted using different transmission resources in the transmission resource set associated with the HARQ entity.

In some embodiments, an identifier of the transmission resources used for the uplink data is different from an identifier of the transmission resources used for the downlink data; and/or, the number of the transmission resources used for the uplink data is different from the number of the transmission resources used for the downlink data.

In some embodiments, the first control information includes at least one of the following: an HARQ entity identifier, a PDSCH identifier, a PUSCH identifier, a carrier identifier, an indication of a correspondence between the PDSCH identifier and the carrier identifier, an indication of a correspondence between the PUSCH identifier and the carrier identifier, a rule for the correspondence between the PDSCH identifier and the carrier identifier, or a rule for the correspondence between the PUSCH identifier and the carrier identifier.

In some embodiments, the second control information includes at least one of the following: an HARQ entity identifier, a PDSCH identifier, a PUSCH identifier, a transmission resource identifier, an indication of a correspondence between the PDSCH identifier and the transmission resource identifier, an indication of a correspondence between the PUSCH identifier and the transmission resource identifier, a rule for the correspondence between the PDSCH identifier and the transmission resource identifier, or a rule for the correspondence between the PUSCH identifier and the transmission resource identifier.

In some embodiments, the first control information includes at least one of the following: a radio resource control (RRC) message, or downlink control information (DCI).

In some embodiments, the second control information includes at least one of the following: an RRC message, or DCI.

In some embodiments, the HARQ entity is any one of the following: an HARQ entity corresponding to one data radio bearer (DRB), an HARQ entity corresponding to a plurality of DRBs, or an HARQ entity corresponding to a plurality of DRBs after being multiplexed in medium access control (MAC) layer.

FIG. 22 shows a schematic composition diagram of another communication apparatus provided by an embodiment of the present disclosure. As shown in FIG. 22, the communication apparatus 60 includes a processing unit 601 and a sending unit 602.

The communication apparatus 60 may be the above second node or a chip in the second node. When the communication apparatus 60 is configured to implement the functions of the second node in the above embodiments, each unit is specifically configured to implement the following functions.

The processing unit 601 is configured to associate one HARQ entity with one physical shared channel set.

The sending unit 602 is configured to send first control information, wherein the first control information is used for indicating an association relationship between the HARQ entity and the physical shared channel set.

In some embodiments, the processing unit 601 is further configured to determine a transmission resource set corresponding to the physical shared channel set.

The sending unit 602 is further configured to send second control information, wherein the second control information is used for indicating a corresponding relationship between physical shared channels in the physical shared channel set and transmission resources in the transmission resource set.

In some embodiments, the processing unit 601 is further configured to associate the HARQ entity with the transmission resource set.

In some embodiments, the physical shared channel set includes at least one of the following: a plurality of physical downlink shared channels (PDSCHs), or a plurality of physical uplink shared channels (PUSCHs).

In some embodiments, the transmission resource set includes a plurality of transmission resources, and the transmission resources include at least one of the following: a carrier, a bandwidth part (BWP), a cell, a beam, or a transmit/receive point (TRP).

In some embodiments, the transmission resource set includes at least one of the following: a carrier set, a BWP set, a cell set, a beam set, or a TRP set, wherein the number of carriers included in the carrier set is greater than 1, the BWP set includes a plurality of BWPs located on different carriers, and the beam set includes a plurality of spatial beams belonging to different carriers.

In some embodiments, all physical shared channels in the physical shared channel set associated with the HARQ entity are able to use an HARQ buffer of the HARQ entity in a shared manner.

In some embodiments, all the transmission resources in the transmission resource set associated with the HARQ entity are able to be used for transmitting data in the HARQ buffer of the HARQ entity.

In some embodiments, new transmission and retransmission of the same data packet under the HARQ entity are respectively carried on different physical shared channels in the physical shared channel set associated with the HARQ entity for transmission.

In some embodiments, new transmission and retransmission of the same data packet under the HARQ entity are respectively performed using different transmission resources in the transmission resource set associated with the HARQ entity for transmission.

In some embodiments, uplink data and downlink data under the HARQ entity are respectively transmitted using different transmission resources in the transmission resource set associated with the HARQ entity; or, uplink data and downlink data under the HARQ entity are respectively transmitted using the same transmission resource in the transmission resource set associated with the HARQ entity.

In some embodiments, an identifier of the transmission resources used for the uplink data is different from an identifier of the transmission resources used for the downlink data; and/or, the number of the transmission resources used for the uplink data is different from the number of the transmission resources used for the downlink data.

In some embodiments, the first control information includes at least one of the following: an HARQ entity identifier, a PDSCH identifier, a PUSCH identifier, a carrier identifier, an indication of a correspondence between the PDSCH identifier and the carrier identifier, an indication of a correspondence between the PUSCH identifier and the carrier identifier, a rule for the correspondence between the PDSCH identifier and the carrier identifier, or a rule for the correspondence between the PUSCH identifier and the carrier identifier.

In some embodiments, the second control information includes at least one of the following: an HARQ entity identifier, a PDSCH identifier, a PUSCH identifier, a transmission resource identifier, an indication of a correspondence between the PDSCH identifier and the transmission resource identifier, an indication of a correspondence between the PUSCH identifier and the transmission resource identifier, a rule for the correspondence between the PDSCH identifier and the transmission resource identifier, or a rule for the correspondence between the PUSCH identifier and the transmission resource identifier.

In some embodiments, the first control information includes at least one of the following: a radio resource control (RRC) message, or downlink control information (DCI).

In some embodiments, the second control information includes at least one of the following: an RRC message, or DCI.

In some embodiments, the HARQ entity is any one of the following: an HARQ entity corresponding to one data radio bearer (DRB), an HARQ entity corresponding to a plurality of DRBs, or an HARQ entity corresponding to a plurality of DRBs after being multiplexed in medium access control (MAC) layer.

It should be noted that the units in FIG. 21 and FIG. 22 may also be referred to as modules. For example, the sending unit may be referred to as a sending module. In addition, in the embodiments shown in FIG. 21 and FIG. 22, the names of the units are not limited to those shown in the figures. For example, the sending unit may also be referred to as a communication unit, and the receiving unit may also be referred to as a communication unit.

The units in FIG. 21 and FIG. 22, if implemented in the form of software functional modules and sold or used as independent products, may be stored in a computer-readable storage medium. Based on this understanding, the technical solutions of the embodiments of the present disclosure essentially, or parts contributing to the prior art, or all or part of the technical solutions can be embodied in a software product form. A computer software product is stored in a storage medium, including a plurality of instructions configured to cause a computer device (may be a personal computer, a server, a network device, etc.) or a processor to perform all or part of the steps of the methods in all the embodiments of the present disclosure. The storage medium storing the computer software product includes: a USB flash drive, a removable hard disk, a read-only memory (ROM), a random access memory (RAM), a magnetic disk, or an optical disk, and other media that can store program codes.

In a case where the above communication apparatus 50 or communication apparatus 60 implements the functions of the above integrated modules in the form of hardware, an embodiment of the present disclosure provides a schematic structural diagram of a communication apparatus. As shown in FIG. 23, the communication apparatus 70 includes: a processor 702, a communication interface 703, and a bus 704. Optionally, the communication apparatus 70 may further include a memory 701.

The processor 702 may implement or execute various exemplary logic blocks, modules and circuits described in combination with the contents disclosed in the present disclosure. The processor 702 may be a central processing unit, a general-purpose processor, a digital signal processor, an application-specific integrated circuit, a field-programmable gate array, or other programmable logic devices, transistor logic devices, hardware components, or any combination thereof. The processor may implement or execute various exemplary logic blocks, modules and circuits described in combination with the contents disclosed in the present disclosure. The processor 702 may also be a combination implementing a computing function, for example, a combination containing one or more microprocessors, a combination of DSP and the microprocessor, etc.

The communication interface 703 is configured to connect to other devices via a communication network. The communication network may be Ethernet, a radio access network, a wireless local area network (WLAN), or the like.

The memory 701 may be a read-only memory (ROM) or other types of static storage devices capable of storing static information and instructions, may be a random access memory (RAM) or other types of dynamic storage devices capable of storing information and instructions, and may also be an electrically erasable programmable read-only memory (EEPROM), a magnetic disk storage medium or other magnetic storage devices, or any other media that can be configured to carry or store desired program codes in the form of instructions or data structures and that can be accessed by a computer, which is not limited thereto.

As a possible implementation, the memory 701 may exist independently of the processor 702, and the memory 701 may be connected to the processor 702 via the bus 704 for storing instructions or program codes. The processor 702, when invoking and executing the instructions or program codes stored in the memory 701, can implement the information transmission method provided in the embodiments of the present disclosure.

In another possible implementation, the memory 701 may also be integrated with the processor 702.

The bus 704 may be an extended industry standard architecture (EISA) bus or the like. The bus 704 may be divided into an address bus, a data bus, a control bus, and the like. For facilitating representation, the bus is only represented with a thick line in FIG. 23, but it does not represent that there is only one bus or any type of buses.

From the description of the above implementations, those skilled in the art can clearly understand that, for the convenience and brevity of description, only the division of the above functional modules is used as an example for illustration. In actual applications, the above functions may be allocated to different functional modules to be completed as needed. That is, an internal structure of the base station or the terminal may be divided into different functional modules to complete all or part of the functions described above.

An embodiment of the present disclosure further provides a computer-readable storage medium. All or part of the processes in the above method embodiments may be completed by related hardware instructed by computer instructions. The program may be stored in the above computer-readable storage medium, and the program, when executed, may include the processes of the above method embodiments. The computer-readable storage medium may be an internal memory of any of the foregoing embodiments. The above computer-readable storage medium may also be an external storage device of the above first node or second node, for example, a plug-in hard disk, a smart media card (SMC), a secure digital (SD) card, a flash card, or the like, equipped on the above first node or second node. Further, the above computer-readable storage medium may also include both the internal storage unit of the above first node or second node and the external storage device. The above computer-readable storage medium is configured to store the above computer program and other programs and data required by the above first node or second node. The above computer-readable storage medium may further be used for temporarily storing data that has been or will be outputted.

An embodiment of the present disclosure further provides a computer program product, the computer product contains a computer program, and the computer program product, when running on a computer, causes the computer to perform any one of the information transmission methods provided in the above embodiments.

Although the present disclosure is described herein in conjunction with various embodiments, those skilled in the art may, in a process of practicing the claimed present disclosure, understand and implement other variations of the disclosed embodiments by viewing the accompanying drawings, the disclosed content, and the appended claims. In the claims, the word "comprising" does not exclude other components or steps, and "a" or "an" does not exclude a plurality. A single processor or other units may implement several functions recited in the claims. The fact that certain measures are recorded in mutually different dependent claims does not indicate that these measures cannot be combined to produce a good effect.

Although the present disclosure is described in conjunction with specific features and embodiments thereof, it is evident that various modifications and combinations may be made thereto without departing from the spirit and scope of the present disclosure. Accordingly, the present specification and the accompanying drawings are merely exemplary illustrations of the present disclosure as defined by the appended claims, and are deemed to cover any and all modifications, variations, combinations, or equivalents within the scope of the present disclosure. Apparently, those skilled in the art can make various modifications and variations to the present disclosure without departing from the spirit and scope of the present disclosure. In this way, if these modifications and variations of the present disclosure fall within the scope of the claims of the present disclosure and equivalent technologies thereof, the present disclosure is also intended to include these modifications and variations.

The above are merely specific implementations of the present disclosure, but the scope of protection of the present disclosure is not limited thereto. Any changes or substitutions within the technical scope disclosed in the present disclosure should fall within the scope of protection of the present disclosure. Therefore, the scope of protection of the present disclosure needs to be subjected to the scope of protection of the claims.

## Claims

1. An information transmission method, applied to a first node, and comprising:
receiving first control information, wherein the first control information is used for indicating an association relationship between one hybrid automatic repeat request (HARQ) entity and one physical shared channel set; and
associating the HARQ entity with the physical shared channel set based on the first control information.

2. The method according to claim 1, further comprising:
receiving second control information, wherein the second control information is used for indicating a corresponding relationship between physical shared channels in the physical shared channel set and transmission resources in a transmission resource set; and
determining, based on the second control information, the transmission resource set corresponding to the physical shared channel set.

3. The method according to claim 1 or 2, further comprising:
associating the HARQ entity with the transmission resource set.

4. The method according to claim 1, wherein the physical shared channel set comprises at least one of the following: a plurality of physical downlink shared channels (PDSCHs), or a plurality of physical uplink shared channels (PUSCHs).

5. The method according to claim 2, wherein the transmission resource set comprises a plurality of transmission resources, and the transmission resources comprise at least one of the following: a carrier, a bandwidth part (BWP), a cell, a beam, or a transmit/receive point (TRP).

6. The method according to claim 5, wherein the transmission resource set comprises at least one of the following: a carrier set, a BWP set, a cell set, a beam set, or a TRP set, wherein the number of carriers comprised in the carrier set is greater than 1, the BWP set comprises a plurality of BWPs located on different carriers, and the beam set comprises a plurality of spatial beams belonging to different carriers.

7. The method according to claim 1, wherein all physical shared channels in the physical shared channel set associated with the HARQ entity are able to use an HARQ buffer of the HARQ entity in a shared manner.

8. The method according to claim 3, wherein all the transmission resources in the transmission resource set associated with the HARQ entity are able to be used for transmitting data in the HARQ buffer of the HARQ entity.

9. The method according to claim 1, wherein new transmission and retransmission of the same data packet under the HARQ entity are respectively carried on different physical shared channels in the physical shared channel set associated with the HARQ entity for transmission.

10. The method according to claim 3, wherein new transmission and retransmission of the same data packet under the HARQ entity are respectively performed using different transmission resources in the transmission resource set associated with the HARQ entity for transmission.

11. The method according to claim 3, wherein
uplink data and downlink data under the HARQ entity are respectively transmitted using different transmission resources in the transmission resource set associated with the HARQ entity; or,
the uplink data and the downlink data under the HARQ entity are respectively transmitted using the same transmission resource in the transmission resource set associated with the HARQ entity.

12. The method according to claim 11, wherein an identifier of the transmission resources used for the uplink data is different from an identifier of the transmission resources used for the downlink data; and/or, the number of the transmission resources used for the uplink data is different from the number of the transmission resources used for the downlink data.

13. The method according to claim 1, wherein the first control information comprises at least one of the following: an HARQ entity identifier, a PDSCH identifier, a PUSCH identifier, a carrier identifier, an indication of a correspondence between the PDSCH identifier and the carrier identifier, an indication of a correspondence between the PUSCH identifier and the carrier identifier, a rule for the correspondence between the PDSCH identifier and the carrier identifier, or a rule for the correspondence between the PUSCH identifier and the carrier identifier.

14. The method according to claim 2, wherein the second control information comprises at least one of the following: an HARQ entity identifier, a PDSCH identifier, a PUSCH identifier, a transmission resource identifier, an indication of a correspondence between the PDSCH identifier and the transmission resource identifier, an indication of a correspondence between the PUSCH identifier and the transmission resource identifier, a rule for the correspondence between the PDSCH identifier and the transmission resource identifier, or a rule for the correspondence between the PUSCH identifier and the transmission resource identifier.

15. The method according to claim 1, wherein the first control information comprises at least one of the following: a radio resource control (RRC) message, or downlink control information (DCI).

16. The method according to claim 2, wherein the second control information comprises at least one of the following: an RRC message, or DCI.

17. The method according to claim 1, wherein the HARQ entity is any one of the following: an HARQ entity corresponding to one data radio bearer (DRB), an HARQ entity corresponding to a plurality of DRBs, or an HARQ entity corresponding to a plurality of DRBs after being multiplexed in medium access control (MAC) layer.

18. An information transmission method, applied to a second node, and comprising:
associating one HARQ entity with one physical shared channel set; and
sending first control information, wherein the first control information is used for indicating an association relationship between the HARQ entity and the physical shared channel set.

19. The method according to claim 18, further comprising:
determining a transmission resource set corresponding to the physical shared channel set; and
sending second control information, wherein the second control information is used for indicating a corresponding relationship between physical shared channels in the physical shared channel set and transmission resources in the transmission resource set.

20. The method according to claim 18 or 19, further comprising:
associating the HARQ entity with the transmission resource set.

21. The method according to claim 18, wherein the physical shared channel set comprises at least one of the following: a plurality of physical downlink shared channels (PDSCHs), or a plurality of physical uplink shared channels (PUSCHs).

22. The method according to claim 19, wherein the transmission resource set comprises a plurality of transmission resources, and the transmission resources comprise at least one of the following: a carrier, a bandwidth part (BWP), a cell, a beam, or a transmit/receive point (TRP).

23. The method according to claim 22, wherein the transmission resource set comprises at least one of the following: a carrier set, a BWP set, a cell set, a beam set, or a TRP set, wherein the number of carriers comprised in the carrier set is greater than 1, the BWP set comprises a plurality of BWPs located on different carriers, and the beam set comprises a plurality of spatial beams belonging to different carriers.

24. The method according to claim 18, wherein all physical shared channels in the physical shared channel set associated with the HARQ entity are able to use an HARQ buffer of the HARQ entity in a shared manner.

25. The method according to claim 20, wherein all the transmission resources in the transmission resource set associated with the HARQ entity are able to be used for transmitting data in the HARQ buffer of the HARQ entity.

26. The method according to claim 18, wherein new transmission and retransmission of the same data packet under the HARQ entity are respectively carried on different physical shared channels in the physical shared channel set associated with the HARQ entity for transmission.

27. The method according to claim 20, wherein new transmission and retransmission of the same data packet under the HARQ entity are respectively performed using different transmission resources in the transmission resource set associated with the HARQ entity for transmission.

28. The method according to claim 20, wherein
uplink data and downlink data under the HARQ entity are respectively transmitted using different transmission resources in the transmission resource set associated with the HARQ entity; or,
the uplink data and the downlink data under the HARQ entity are respectively transmitted using the same transmission resource in the transmission resource set associated with the HARQ entity.

29. The method according to claim 28, wherein an identifier of the transmission resources used for the uplink data is different from an identifier of the transmission resources used for the downlink data; and/or, the number of the transmission resources used for the uplink data is different from the number of the transmission resources used for the downlink data.

30. The method according to claim 18, wherein the first control information comprises at least one of the following: an HARQ entity identifier, a PDSCH identifier, a PUSCH identifier, a carrier identifier, an indication of a correspondence between the PDSCH identifier and the carrier identifier, an indication of a correspondence between the PUSCH identifier and the carrier identifier, a rule for the correspondence between the PDSCH identifier and the carrier identifier, or a rule for the correspondence between the PUSCH identifier and the carrier identifier.

31. The method according to claim 19, wherein the second control information comprises at least one of the following: an HARQ entity identifier, a PDSCH identifier, a PUSCH identifier, a transmission resource identifier, an indication of a correspondence between the PDSCH identifier and the transmission resource identifier, an indication of a correspondence between the PUSCH identifier and the transmission resource identifier, a rule for the correspondence between the PDSCH identifier and the transmission resource identifier, or a rule for the correspondence between the PUSCH identifier and the transmission resource identifier.

32. The method according to claim 18, wherein the first control information comprises at least one of the following: a radio resource control (RRC) message, or downlink control information (DCI).

33. The method according to claim 19, wherein the second control information comprises at least one of the following: an RRC message, or DCI.

34. The method according to claim 18, wherein the HARQ entity is any one of the following: an HARQ entity corresponding to one data radio bearer (DRB), an HARQ entity corresponding to a plurality of DRBs, or an HARQ entity corresponding to a plurality of DRBs after being multiplexed in medium access control (MAC) layer.

35. A communication apparatus, comprising: a memory and a processor; wherein the memory and the processor are coupled; the memory is configured to store processor-executable instructions; and the processor, when executing the instructions, performs the method according to any one of claims 1 to 17, or the method according to any one of claims 18 to 34.

36. A computer-readable storage medium, wherein the computer-readable storage medium stores computer instructions thereon, and the computer instructions, when running on a computer, cause the computer to perform the method according to any one of claims 1 to 17, or the method according to any one of claims 18 to 34.
